# EUROPEAN PATENT APPLICATION

(11) **EP 4 843 729 A1**
(43) Date of publication of application: **25.11.2026**
(21) Application number: 26179753.4
(22) Date of filing: 20.05.2026
(51) Int. Cl.: B27B 5/065, B23D 59/00, B65C 1/02, B27B 31/00

(54) **PANEL CUTTING MACHINE AND RELATED OPERATING METHOD**

(30) Priority: 23.05.2025 IT 202500011740
(71) Applicant: Naldi, Valter, 40137 Bologna (IT)
(72) Inventor: Naldi, Valter, 40137 Bologna (IT)

(57) **Abstract**

Cutting machine (1) for cutting panels (P) made of wood, polymers, composite materials, fibre-cement or the like with consequent formation of elements (EL); the cutting machine (1) comprising an applicator (17) for the application of an identification element (16) on an element (EL) leaving the cutting station (2). The applicator means (17) being movable, downstream of the cutting station (2), according to a first direction (F2) perpendicular to the cutting station (2) and according to a third vertical direction (F3) perpendicular to the support plane (9). It is also described an operating method for the functioning of the cutting machine and in particular for the functioning of the applicator (17).

## Description

### TECHNICAL FIELD

The invention relates to a cutting machine for cutting panels made of wood or the like and to a corresponding operating method.

### PRIOR ART

In the industry dealing with the processing of panels made of wood, a cutting machine is known, which comprises a support frame defining a substantially horizontal support and/or feeding plane for at least one panel made of wood or the like; a cutting station; a main pushing member for moving at least one first panel or at least one first stack of panels forward and, if necessary, backward in a first direction through the cutting station; and a cutting device consisting of a tool-holder carriage mounted in the cutting station so as to move in a second direction and along a cutting plane perpendicular to the first direction in order to cut the panels.

The feeding plane generally consists of a roller device mounted upstream of the cutting station, whereas the output table, located downstream of the cutting station, generally consists of one or more air cushion planes to facilitate the handling and unloading of the panels being processed.

In addition, the continuous application and implementation of automation in production processes led to the integration, in some cutting machines, of a robotic manipulator mounted downstream of the cutting station or of the output table to retrieve the components cut from the original panels by means of the cutting device and feed them again to the main pushing member for the execution of further cuts by means of the same cutting station and definitively unload them from the cutting machine when they are completed.

A trapdoor for the automatic unloading of swarf is provided between the cutting station and the output table.

The robotic manipulator comprises a base, a system of articulated arms connected to one another and to the base and a panel pick-up unit coupled to the articulated arms.

The panel pick-up unit comprises a frame coupled to the articulated arms in a rotary manner and supports one or more movable arms provided with respective suction cups connected to a suction device for moving the single panels between the various stations of the cutting machine and for unloading the panels, when they are cut to measure and completed, outside the machine. Obviously, in case of a stack of panels has to be cut, the retrieving and handling operation must be replicated by the pick-up unit for each single panel making up the stack itself.

It should be noted here that "just-in-time" production, which is prevalent in modern industry, requires that each single panel cut out of the cutting machine must be clearly identified in order to be conveyed to the subsequent finishing operations according to appropriate processing programs that can promptly be called up upon reading or detecting specific codes (barcodes, QR codes, RFID codes or other) provided on specific identification media consisting mainly, but not exclusively, of labels or adhesive elements applied to the single panels, mainly at the exit of the cutting station.

To this aim see what is described in the Holzma patent EP2286969B1 wherein the cutting machine is provided with a special system for printing adhesive labels that are applied to the single panel by means of a movable arm immediately downstream of and in any case near the cutting station. The movable arm for the application of the labels has the possibility of moving horizontally along a guide parallel to the cutting station to align, always at the same distance from the cutting station, with the panels on which the labels must be applied and vertically to adapt to the thickness of the panels and then be excluded from the exit area of the panels from the cutting station when they must be moved. In fact, in this case, the printing and application of the labels takes place during the cutting operation while the panel, or panels in the case of simultaneous cutting of two or more panels side by side, are stationary.

This label application system proves to be useful in case single panels have to be cut, but it is not equally useful in case stacked panels, namely several overlapping panels, have to be cut. As a matter of fact, it is evident that the robotic manipulator in charge of unloading the cut panels will only be able to pick up the upper panel/s of the stack/s of panels already labelled during the cutting operation. Only after this operation of picking up the panel/s at the top of the stack, it will be possible to proceed with a further operation of "labelling" the panels underneath, inevitably stopping the cutting operation until the lower panels of the stack have all been labelled and picked up. It is more than evident that this operation creates a significant delay in the cutting operation, resulting in a slowdown in the production process and in an increase in the cost of the finished product.

In the Holzma patent DE102008032159A1, the system for printing adhesive labels on the single panel is positioned along the exit plane of the finished panels and is positioned at a fixed distance from the cutting station. Therefore, in this solution, the same problem highlighted in the previous document arises again.

To overcome this problem, systems have been developed, which are designed to apply labels containing the relative codes directly on the original entire panel in a dedicated pre-loading station of the cutting machine, namely in a station that precedes the feeding plane leading to the cutting station. To this regard, see documents EP2251131B1 (Schelling) and ITBO20130596 (1420497) (Biesse), wherein a label application equipment operates on said pre-loading station containing the original panels to be cut, is fixed on a system of Cartesian axes and, controlled by the numerical control of the cutting machine, applies each single label in the single positions assumed by the various panels during the following cutting phase. Therefore, in case several panels of a same stack have to be cut, the relative labels will be applied to the single original panels, which will be loaded individually and in succession onto the cutting machine, ready to be cut in a stack and simultaneously.

Obviously, this solution requires a special additional station and additional means of transport that increase both the overall size and the final cost of the machine as a whole. In addition, the thickness of the labels placed between the various panels determines a gap between them that causes small chips during the stack cutting operation. In fact, in order to obtain a perfectly finished cut without chips, it is essential to have all the surfaces of the various panels perfectly in contact with one another as a result of the action exerted by an upper pressing bar operated during the cutting operation.

### DESCRIPTION OF THE INVENTION

Therefore, one of the objects of the invention is to provide a cutting machine with a system for identifying the various cut panels located downstream of the cutting station, which has the particularity of being movable and suited to be positioned above the various finished panels during their phase of moving away from the cutting station on the unloading plane while leaving the cutting machine.

A further object of the invention is to apply an identification code in succession on the finished panels, when they overlap one another, quickly and reliably without slowing down the cutting process, namely, if necessary, in coordination with the robotic manipulator in charge of their unloading.

Incidentally, although in the description of the invention reference is made to the existence of a robotic manipulator or a Cartesian coordinate manipulator of panels combined with the cutting machine, the teaches of the invention can be applied to any cutting machine that does not have one.

Hence, the invention relates to a panel cutting machine and to a cutting method as defined in the independent claims attached hereto and, preferably, as defined in any one of the dependent claims directly or indirectly depending on the aforesaid independent claims.

### BRIEF DESCRIPTION OF THE DRAWINGS

The invention will be best understood upon perusal of the following description of a preferred non-limiting embodiment, with reference to the following accompanying drawings:
- figure 1 schematically shows, in a plan view, a cutting machine according to the invention;
- figure 2 shows a side view from the right of the cutting machine of figure 1 (with parts removed for greater clarity), during a step of picking up first panels cut by a robotic manipulator;
- figure 3 shows a front view of the cutting machine of figure 1 (with parts removed for greater clarity) with the movable device for applying an identification code on the cut panels;
- figure 4 shows a front view of the cutting machine of figure 1 (with parts removed for greater clarity) with an alternative embodiment of the movable device for applying an identification code on the cut panels;
- figure 5 shows a plan view of the cutting machine with the movable device for applying the identification code of figure 3 operating on the cut panels;
- figure 6 shows a side view of a portion of the cutting machine during a first step of applying an identification code on a panel leaving the cutting machine;
- figure 7 shows a side view of a portion of the cutting machine during a second step of applying an identification code on a further panel leaving the cutting machine;
- figure 8 shows a side view of a portion of the cutting machine during a third step of applying an identification code on a further panel leaving the cutting machine;
- figure 9 shows a side view of a portion of the cutting machine during a fourth step of applying an identification code on a further panel leaving the cutting machine;
- figure 10 shows a side view of a portion of the cutting machine during a fifth step of applying an identification code on a further panel leaving the cutting machine;
- figure 11 shows a side view of a portion of the cutting machine during a sixth step of applying an identification code on a further panel leaving the cutting machine; and
- figure 12 shows a plan view of the cutting machine highlighting a step of unloading the cut panels, a simultaneous step of applying an identification code on the side-by-side panels leaving the cutting machine and a simultaneous step of longitudinally cutting new panels on the cutting station.

### PREFERRED EMBODIMENT OF THE INVENTION

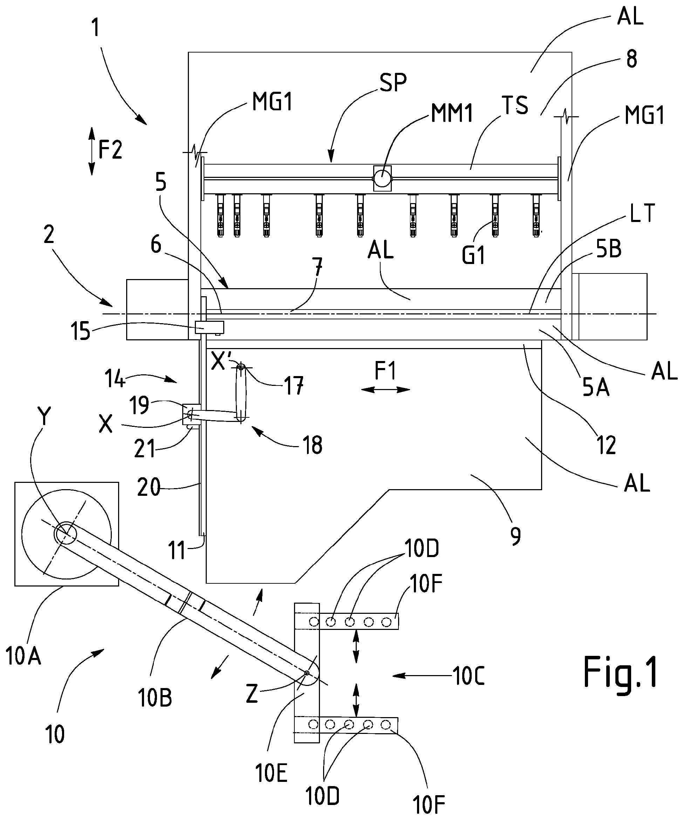

With reference to figures 1 to 12, number 1 indicates the cutting machine for panels (P) according to the invention.

For the purposes of this disclosure, the terms "panel" (P), "strip" (STR), etc. must all be considered as relating to substantially flat elements (for example, slabs, laminate items, plates of various sizes for the construction of furniture, slabs, laminate items and plates made of polymer materials, building materials or light alloys or relative strips, etc.) suited to be cut by means of the cutting machine 1 according to the invention. In this context, the term "processed element" (EL) or simply "element" (EL) relates to elements resulting from the cutting of panels (P) carried out by means of the cutting machine (1).

Furthermore, in this description, the term "stack" is to be understood as a vertically stacked set of two or more panels (P) or strips (STR).

It should be noted that, in an equivalent manner, stacks of elements (EL) could also be identified (meaning a plurality of stacked elements (EL), obtained by cutting a stack of panels (P) or strips (STR)).

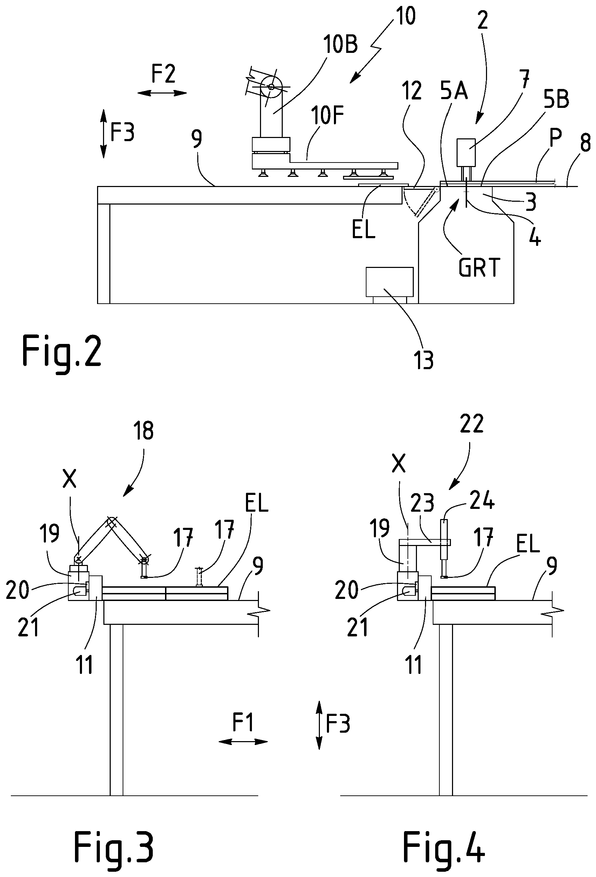

The cutting machine 1 is of the horizontal type with a cutting station (2) of the type having a cutting assembly (GRT) with a movable tool-holder carriage located below or above the panels being processed and whose tools can be of different nature: circular saws, milling cutters or other. Figure 2 shows a non-limiting solution, in which the movable carriage (GRT) can slide and is operated in a known manner along a base (3) (figure 2) according to directions and ways defined by an arrow (F1) (figure 1).

During the active cutting step, the tools (figure 2) (in the example shown herein, one single cutting blade 4, mounted on the cutting assembly (GRT), is visible in figure 2, whereas the possible scorer is not shown) are lifted (or lowered, in other solutions) above a base work plane 5 (figure 1) along the base (3), while they are lowered (or lifted, in other solutions) during the step of returning to the start-of-cut position.

In the embodiment shown herein, by way of non-limiting explanation, there generally are two cutting tools, a cutting tool (cutting blade (4)) and a scorer tool (not shown), and, during the cutting step, they both slide within a cutting slit (6) (figure 1) obtained in the base work plane (5), which, by so doing, is divided into two portions upstream (5B) and downstream (5A), respectively, of a generally middle line, which is commonly defined as cutting line (LT) (figure 1), obviously parallel to the arrow (F1).

As shown in figure 2, a known upper pressing member (7) is suited, during the cutting step, to lock the panels (P) on the base work plane (5) by means of a known vertical movement.

During the positioning of the panels (P), before the cut, the upper pressing member (7) always is in a lifted position.

In a known manner, the cutting machine 1 is provided with a main pushing member (SP), in the form of an overhead crane, provided with a first plurality of grippers (G1) (figure 1) and possibly with a known secondary pushing member (not shown) equipped with a second plurality of grippers similar to those of the main pushing member (SP).

The cutting machine (1) normally comprises a feeding and moving plane (8) located upstream of the cutting station (2) (represented by way of non-limiting example in the attached figures 1, 2, 5, 12). Said feeding and moving plane (8) can be, for example, of the roller type (but, alternatively, it could also be of a different nature) and can be provided with optional rotation means (not shown) for rotating the panels (P) and/or portions thereof in order to obtain the orientation needed to carry out the various cuts to size entailed in the cutting scheme to be performed.

Therefore, the work area (AL) (figure 1) of the cutting machine (1) comprises, in sequence, the aforementioned feeding and moving plane (8), the aforementioned base work plane (5) and continues past the base work plane (5) in the form of one or more support planes (9); the feeding plane (8), the base work plane (5) and the support plane or planes (9) preferably are all arranged at the same level, but not necessarily.

It should be noted here that, in some cutting machines with a cutting assembly (GRT) located above the work area (AL), the feeding and moving plane (8) can be extended up to the side of the cutting slit (6) upstream of the cutting line (LT) and the support plane (9) can be extended up to the side of the cutting slit (6) downstream of the cutting line (LT). Therefore, hereinafter, the support plane (or planes) (9) will identify the entire plane downstream of the cutting line (LT).

Therefore, the support plane (9) is intended to support and slide the panels (P) and/or the strips (STR) and any other cut portions (i.e. said at least one element (EL)) leaving the cutting station (2) to as to allow for their correct orientation and possible reinsertion in the cutting machine 1, for example by means of a robotic manipulator 10 (represented by way of non-limiting example in the attached figures 1, 2, 4-11 and better disclosed below).

In a known manner, the main pushing member (SP), by means of the relative grippers (G1), picks up the various panels (P), strips (STR), etc. to be cut from the feeding and moving plane (8) or from the support plane (9) to position them accurately, according to the set program, on the cutting line (LT), where their cutting takes place by means of the cutting station (2) and, in particular, in the specific case shown herein, by means of the blade (4), thus obtaining the elements (EL) that will be subsequently picked up from the support plane (9).

The operating field of the main pushing member (SP) extends above the feeding and moving plane (8), which, therefore, has a width almost coinciding with that of the cutting line (LT) and a length almost coinciding with the usable stroke of the main pushing member (SP) determined by the rear limit stop in its retracted position (not shown) and by the cutting line (LT) in its forward position.

However, in some cutting machines, the rear limit stop of the main pushing member (SP) can be extended to allow the panels (P) to be automatically loaded from an area behind the feeding and moving plane (8) and the front limit stop can be extended beyond the cutting line (LT) and up to and/or near the support plane (9) to allow, if necessary, the elements (EL) obtained by cutting at least one panel (P) to be more easily picked up.

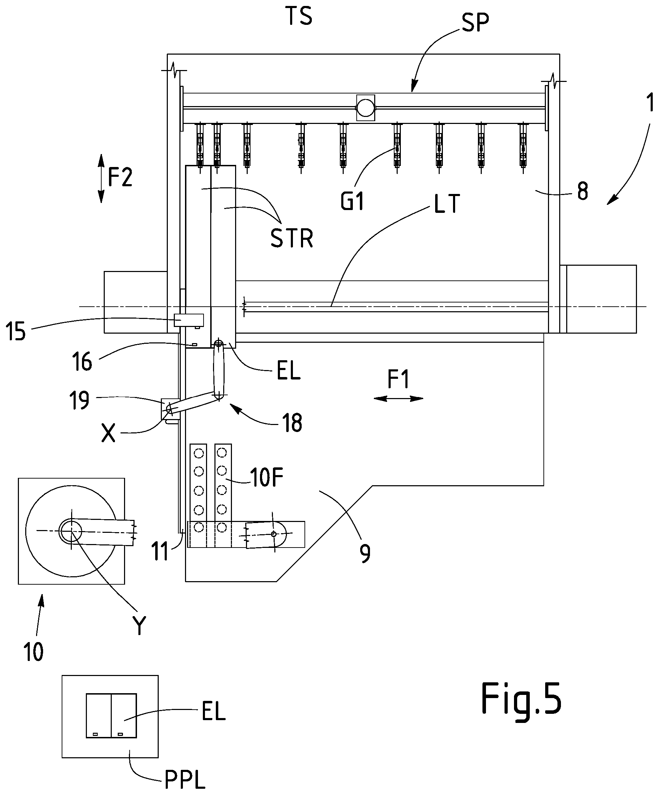

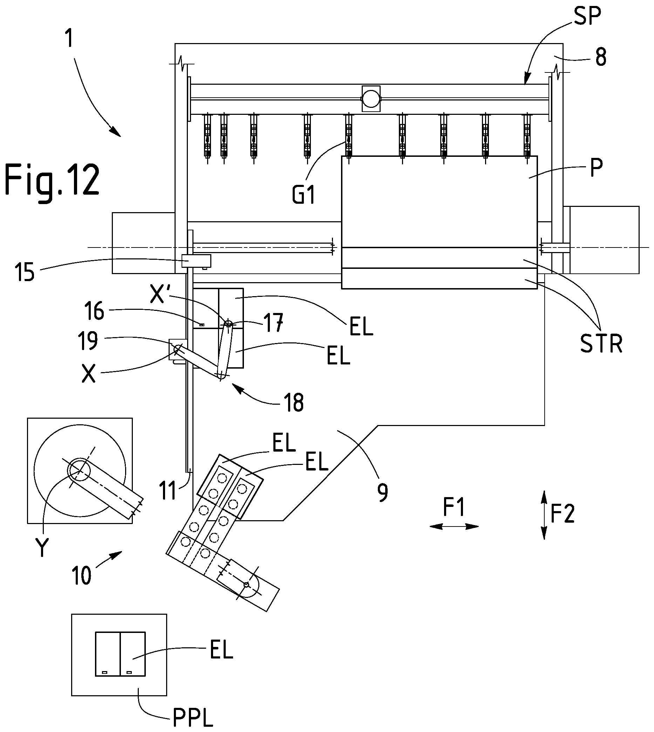

In the embodiment shown herein, on the main pushing member (SP) and, in particular, on a cross member (TS) thereof (represented by way of non-limiting example in the attached figure 1), there are fixed the aforementioned grippers (G1) for locking and transporting, in a manner fit to their size, the panels (P) and/or the strips (STR) to be cut (represented by way of non-limiting example in the attached figures 5, 12) through the cutting station (2).

Furthermore, the main pushing member (SP) is operated, along the first guiding means (MG1), by longitudinal moving means (MM1) of the known type (represented by way of non-limiting example in the attached figure 1).

In a known manner, the pushing member (SP) can move horizontally according to the direction and ways identified by an arrow (F2) (figure 1) substantially perpendicular to the aforementioned arrow (F1) of the cutting direction.

As shown by way of non-limiting example in figures 1, 3, 4, 5, 12, in the area generally used for the transverse cutting of the strips (STR) or of the panels (P), a reference square (11) is provided so that the strips (STR) or the panels (P) can strike against it in order to be cut transversely at 90 degrees.

As shown by way of non-limiting example in figure 2, a trapdoor (12) for unloading trimming residues (understood as material waste and/or swarf resulting from the cutting operations of each panel (P)) is generally located between the base work plane (5) and the support plane (9).

The trapdoor (12) (represented by way of non-limiting example in figure 2) is therefore located downstream of the cutting station (2) with respect to the normal outflow of elements (EL) obtained by cutting panels (P) (and/or of strips (STR)) and is therefore an integral part of the support plane (9).

This trapdoor (12) is used to automatically unload, in a known manner and under the work area (AL), the swarf (trimming residues) that is generated in the area of the cutting station (2): each panel (P) is in fact made up, following the cutting operations, of the elements (EL) and of portions of waste corresponding to the swarf.

A container (13) for collecting swarf (trimming residues) or, alternatively, a conveyor belt (not shown) is located under the unloading trapdoor (12) (shown by way of non-limiting example in figure 2).

As already mentioned above, the cutting machine (1) according to the invention can optionally be provided with a robotic manipulator (10) located, in a non-limiting solution, downstream of the feeding and moving plane (8) and of the cutting station (2).

The robotic manipulator (10) is suited to remove the elements (EL) obtained following the cutting of the panels (P) and/or the strips (STR) from the area immediately downstream of the cutting station (2) by positioning them in a parking area (i.e. a temporary housing area) on the support plane (9) or directly against the square (11) to send them again to the main pushing member (SP) for the execution of further transverse cuts; the robotic manipulator (10) is also suited to unload the cut elements (EL) onto special pallets (PPL) (as shown by way of non-limiting example in figures 5, 12) and/or onto roller tracks (not shown) for their automatic removal.

In a known manner, the robotic manipulator (10) (figure 1) can rotate around a relative axis (Y) and comprises a base (10A), a system of articulated arms (10B) connected to one another and to the base (10A) and a pick-up unit (10C) fixed to the articulated arms (10B).

Advantageously, though not necessarily, the pick-up unit (10C) of the robotic manipulator (10) comprises a plurality of suction cups (10D), which, in a known manner, are suited to adhere to an upper surface of at least one panel (P) or of a strip (STR). The panels (P) (or the strips (STR)) to be moved by the robotic manipulator (10) are gripped by means of the suction cups (10D).

In particular, the pick-up unit (10C) (as shown by way of non-limiting example in figure 1) comprises a cross member (10E) hinged, in a known manner, to the articulated arms (10B) in the area of an axis (Z) and two arms (10F) on which the aforementioned suction cups (10D) are mounted. These arms (10F), by means of known means, can be moved towards/away from one another, sliding on the cross member (10E), in order to adjust the pick-up system according to the dimensions of the strips (STR) or of the panels (P) to be handled.

As already mentioned, one of the objects of the invention is to provide a cutting machine (1) capable of applying identification codes, such as for example a barcode, a QR code, an RFID code, a numerical or alphanumerical code or other, on elements (EL) obtained by cutting the panels (P), even overlapping one another in a stack, on the plane leaving a cutting machine (1) - represented, as mentioned above, by the support plane (9) - when they move away from the cutting station (2).

To this aim, figures 1-12 show, by way of non-limiting example, a non-limiting solution provided with an identification device (14) for identifying the elements (EL) obtained by cutting the panels (P), in this specific case a labelling device, comprising, in this specific case, a unit (15) for printing an identification code (16) and distributing the corresponding labels and an application unit, an applicator (17), for applying the labels on the panels (P) leaving the cutting station (2).

In order to make the disclosure clearer, hereinafter (16) will identify both the identification code and any label or other medium on which it is printed or inserted.

Obviously, the identification code (16), instead of being properly printed on a label by means of the printing unit (15), can for example be printed or inserted directly on the panel by means of the properly equipped unit (17). Other known systems can be used instead of the label or the direct printing of the code (16) on the elements (EL) obtained by cutting the panels (P).

In the non-limiting example shown herein, the unit (15) for printing and distributing the labels (16) is mounted in a fixed manner in a convenient position accessible to the applicator (17), but it could also be movable and follow the movements of the applicator (17).

The applicator (17) for picking up and applying the labels (16) preferably is, in this specific case, mounted on a robotic manipulator (18) (represented by way of non-limiting example in the attached figures 1, 3, 5, 12) consisting of a system of articulated arms connected to one another and capable of accessing both the unit (15) and the various elements (EL) leaving the cutting station (2) (and obtained by cutting the panels (P)) that must be labelled or in any case must be provided with a specific identification. The robotic manipulator (18) is mounted so as to rotate around an axis (X) (represented by way of non-limiting example in the attached figure 1) on a specific support (19). Said support (19), depending on the length of the articulated arms of the manipulator (18), can be mounted in a fixed or movable position: in this second case, movable according to a direction and ways defined by an arrow (F2) (represented by way of non-limiting example in the attached figure 1), which is perpendicular to the cutting station (2), by means of a relative guide (20) and a motor (21), both of the known type (represented by way of non-limiting example in the attached figures 1, 3).

According to both these embodiments, namely with a fixed or movable support (19), the applicator (17) can assume a variable and known position both with respect to the cutting line (LT) (direction (F2)), and with respect to the square (11) (direction (F1)) as well as with respect to the support plane (9) (direction (F3)) so as to be freely positioned on the upper surface of the panels (P) above the support plane (9) or on a portion of the support plane (9). This solution is particularly useful in the case of cutting of several panels (P) side by side against the square (11) (represented by way of non-limiting example in the attached figures 3, 5, 12).

In an alternative embodiment, the applicator (17) is mounted on an articulated manipulator (22) consisting of an arm (23) (represented by way of non-limiting example in the attached figure 4) integral to the support (19) that is allowed to slide by means of the aforementioned relative guide (20) and motor (21) according to a direction and ways defined by the arrow (F2) perpendicular to the cutting station (2). In this alternative solution, the applicator (17) is provided with a further known vertical movement (24) according to a direction and ways (F3) in order to be able to apply the identification code (16) on the upper surface of the panels (P) (represented by way of non-limiting example in the attached figure 4). In this case, the applicator (17) can assume a variable position with respect to the cutting line (LT) (direction (F2)), while it would always be at a fixed distance from the square (11) (direction (F1)). This solution is suitable in those cutting machines where one single panel (P) or one single stack of panels (P) is cut transversely against the square (11) (represented by way of non-limiting example in the attached figure 4).

It should be noted here that the articulated manipulator member (22), in a known manner that is not shown herein, can also consist of a manipulator member with a Cartesian coordinate movement mounted on the same movable support (19) as described in the previous paragraph. As a matter of fact, this modified Cartesian coordinate manipulator member (22) can derive from the alternative embodiment shown by way of non-limiting example in figure 4 described above. This involves making the support arm (23), duly elongated with respect to the relative support (19), movable by means of a relative guide and a relative motor of a known type according to a direction and ways defined by the arrow (F1) parallel to the cutting station (2). With this articulated manipulator (22), which is movable according to the three Cartesian axes, the applicator (17) can be positioned, according to the needs, above the output plane and, in particular, above the support plane (9) or part thereof, so as to identify several laminate elements (EL) or stacks of laminate elements (EL) side by side against the square (11), for example as shown by way of non-limiting example in figure 3.

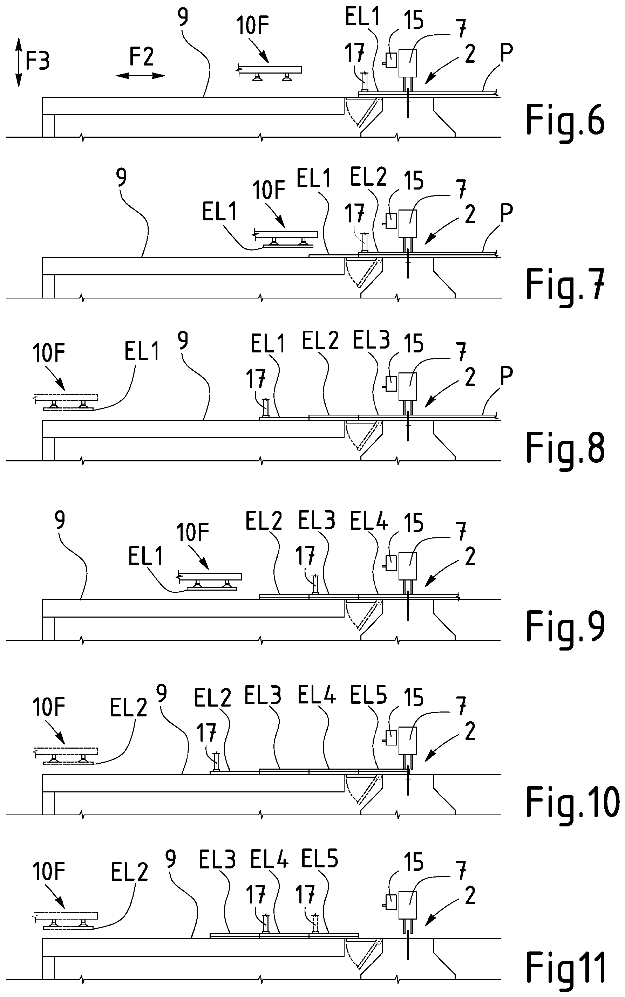

In order to better explain the various possible steps of identifying elements (EL) from the cutting station (2), reference will be made to figures 6-11, where the various operating steps of the cutting machine (1) that are made possible by adopting a movable system of the applicator (17) as described above are highlighted, in a non-limiting sequence.

Figure 6 shows, by way of non-limiting example, a stack of elements (EL1) being cut on the cutting station (2) and resulting from the cutting of a stack of panels (P), while the applicator (17) applies the relative identification code on the upper element (EL1) of the stack of elements (EL1) and the robotic manipulator (10) is waiting to pick it up.

In figure 7, the cutting station (2) is in the process of cutting a second stack of elements (EL2), while the applicator (17) applies the relative identification code on the upper element (EL2) of this same stack of elements (EL2) and the robotic manipulator (10) is in the process of picking up the previously identified upper element (EL1) from the previous stack of elements (EL1).

In figure 8, the cutting station 2 is in the process of cutting a third stack of elements (EL3) and the applicator (17) has moved according to the direction (F2), which is perpendicular to the cutting station (2), above the lower element (EL1) of the previous stack of elements (EL1) to apply the relative identification code, while the robotic manipulator (10) is in the process of unloading the previously identified upper element (EL1) of the previous stack of elements (EL1).

In figure 9, the cutting station (2) is in the process of cutting a fourth stack of elements (EL4), the applicator (17) applies the relative identification code on the upper element (EL3) of the previous stack of elements (EL3) by adequately moving above it and the robotic manipulator (10) is in the process of picking up the already identified lower element (EL1) from the previous stack of elements (EL1).

In figure 10, the cutting station (2) is in the process of cutting a fifth stack of elements (EL5), while the applicator (17) applies the relative identification code on the lower element (EL2) of the stack of elements (EL2) by adequately moving above it and the robotic manipulator (10) is in the process of unloading the previously already identified upper element (EL2) of the stack of elements (EL2).

Figure 11 shows how the various cutting steps have already ended and the applicator (17), by moving above the remaining stacks of elements (EL4), (EL5), identifies all the elements (EL) that have not yet been identified in coordination with the robotic manipulator (10), which will unload them onto the relative station (PPL) or where necessary.

As one can easily assume from the steps described above with reference to figures 6-11, the transverse cutting steps aimed at producing the stacks of elements (EL1), (EL2), (EL3), (EL4) and (EL5) are never interrupted, since the steps of identifying the various produced elements (EL) can be carried out indifferently along the entire support plane (9), at least according to a direction (F2) perpendicular to the cutting station (2).

It is important to note that, as shown in figure 11, the cutting step has ended (while the steps of identifying and unloading of the various laminate elements (EL) have not) and, therefore, the pushing member (SP), which has already performed all its movements, can immediately start a new cutting cycle on a new stack of panels (P) by carrying out the relative longitudinal cutting or whatever is necessary to obtain new stacks of strips (STR) or elements (EL).

As a matter of fact, as shown in figure 12, the pushing member (SP) is already carrying out the longitudinal cutting of a new stack of panels (P) in order to produce relative strips (STR) or stacks of strips (STR), which will then be subsequently translated against the square (11) for performing the relative transverse cuts. All this while the robotic manipulator (10), in conjunction with the applicator (17), ends the unloading of all the previous elements (EL) produced. Figure 12 also shows how the adoption of an applicator (17) that is movable in the three Cartesian directions permits the identification of side-by-side elements (EL).

It should also be noted that the alternative solution of the applicator (17) shown in figure 4 and described above, namely movable only in the directions (F2) and (F3), can carry out all the steps described above and shown in figures 6-11 in case one single panel (P) or one single stack of panels (P) has to be cut, as shown in figure 4.

It is therefore obvious that without the mobility according to the direction and ways identified by the arrow (F2) perpendicular to the cutting direction, all this would not be possible since the cutting station (2) would have to remain waiting until all the lower elements (EL) of the stack of elements (EL) that was just cut and is still on the cutting station (2) (namely, still on the portion of the base work plane (5B), in the example shown) have been identified and this obviously involves waiting for several unloading cycles of the robotic manipulator (10), which has to pick them up.

In a known manner, the identification device (14) for identifying the elements (EL) and, in particular, the applicator (17) and the robotic manipulator (10) are controlled by the electronic control unit of the cutting machine (1), but they could also be controlled by a control and management unit of their own (not shown), which is configured to communicate (exchange data) with the electronic control unit of the cutting machine (1) (for instance, according to a "master-slave" operating mode).

Therefore, the electronic control unit is configured to operatively manage all the parts of the cutting machine (1) and, hence, all its operating steps, directly or indirectly including those of the identification device (14) and, in particular, of the applicator (17) and, optionally, of the robotic manipulator (10).

During the cutting step, the electronic control unit is configured, directly or by means of other connected electronic equipment, to determine the theoretical position or to detect the exact position of each single element (EL) or stack of elements (EL) cut along the output plane leaving the cutting station (2) and, in particular, along the support plane (9) and, therefore, it can instruct the applicator (17) to position itself above the relative element (EL) to be identified and to apply the relative label or, in any case, the necessary identification element in a predetermined position with respect to the relative geometrical shape of the element (EL).

In particular, the electronic control unit is optionally configured to manage a detection system (in a non-limiting solution, a video camera (not shown)) for detecting in real time the actual and exact position - with respect to the square (11) and/or the cutting line (LT) - of the elements (EL) leaving the cutting station (2) and waiting to be identified and, therefore, the electronic control unit is optionally configured to send in real time data strings with corrections or new instructions so as to correctly direct and position the applicator (17) above the actual position of the element to be identified.

Optionally, the applicator (17) is configured to rotate with respect to at least one relative vertical axis (X; X') (figure 1, 3, 4, 12) and, hence, is configured to apply the relative label or, in any case, the necessary identification element in a perfectly orthogonal position and in a predetermined position with respect to the geometrical shape of the elements (EL) to be identified. Figure 12 shows how the applicator (17) was positioned above the element (EL) to be identified and in a pre-established and orthogonal position with respect to the geometrical shape of the element (EL), having rotated with respect to the relative central axis (X'). Obviously, the same situation would occur if the element (EL) to be identified had accidentally moved from its theoretical position, possibly also being rotated with respect to the reference square (11) or the cutting line (LT).

It is clear to the person skilled in the art that the type and means of detection of the actual position of the elements (EL) can be of a different nature and of a different technology, with the possibility of choosing the most appropriate system during the design stages based on the nature of what must be detected (colour, surface, dimensions, etc.) and the relative precision required.

As shown in figure 12, the robotic manipulator (10), by using the relative arms (10C) and the relative suitably positioned suction cups (10d), can thus proceed, in a masked time with respect to the operations of cutting and identifying the elements (EL), to unload the elements (EL), already identified and in a known position, outside the cutting machine (1) onto relative pallets (PPL) (shown by way of non-limiting example in the attached figures 5, 12), which were previously prepared, and/or onto roller tracks (not shown).

Therefore, to sum up, the action of cutting, moving, picking up and/or parking, identifying and/or unloading the panels (P) and the elements (EL) is carried out dynamically by the electronic control unit (numerical control or electronic system) that manages the cutting machine (1), as it manages the flow in each step of its, knowing at all times both all the operations to be carried out and the position of each single panel (P) and element (EL), during the relative cutting and unloading cycle.

As described, the invention also relates to a method for identifying elements (EL) during the process of processing flat panels (P); the method is suited to be implemented in a cutting machine (1) of the type comprising: at least one cutting station (2); at least one pushing member (SP) configured to move at least one panel (P) or at least one stack of panels (P) through the cutting station (2) according to a first direction (F2) substantially orthogonal with respect to said cutting station (2); a cutting assembly (GRT) mounted in said cutting station (2) and movable according to a second direction (F1) along a cutting line (LT) perpendicular to the first direction (F2) to cut at least one component chosen from said at least one panel (P) and at least one stack of overlapping panels (P); a work area (AL) configured to support said at least one component chosen from said at least one panel (P) and at least one stack of overlapping panels (P); said work area (AL) being defined by the set of a feeding plane (8) and a support plane (9); said support plane (9) being placed downstream of said cutting station (2) for the temporary housing of at least one element (EL); an identification device (14) for the panels (P) comprising, in turn, an applicator (17) for the application of an identification element (16) on said at least one element (EL) leaving the cutting station (2) and an electronic control unit configured for the management and control of the cutting machine (1); the operating method of the cutting machine (1) entails that the electronic control unit of the cutting machine (1) is configured, directly or by means of other electronic equipment, to determine the theoretical position and/or detect the exact position of each single element (EL) or each single stack of element (EL) cut on the support plane (9) and that said electronic control unit is configured so that the applicator (17) can apply the identification code (16) on the elements (EL) cut from the panels (P) leaving the cutting station (2) on the support plane (9) by placing itself above the elements (EL) on the support plane (9) according to a direction and ways determined by an arrow (F2) perpendicular to the cutting station (2). Furthermore, the operating method entails that the applicator means (17) is configured to apply the identification code (16) on the cut elements (EL) leaving the cutting station (2) on the support plane (9) by placing itself above the support plane (9) in the area of the element (EL) to be identified according to a further direction and ways determined by an arrow (F1) parallel to the cutting station (2). In addition, the operating method entails that the applicator means (17) is configured to rotate around at least one relative axis (X; X') to apply the identification code (16) on the elements (EL) in an orthogonal position with respect to the geometrical shape of the cut elements (EL) leaving the cutting station (2) on the support plane (9) by placing itself above the support plane (9) in the area of the elements (EL) to be identified in an orthogonal position with respect to the geometrical shape of the elements (EL).

The advantage offered by this innovative solution is represented, first of all, by the significant increase in productivity, since, in cutting machines assisted by a robotic manipulator, the identification of all the elements (EL) of the cut stack leaving the cutting station (2) is guaranteed independently of the cutting cycle being executed.

It should also be noted here that the solution suggested herein can also be used in any cutting machine of the type described above, hence with relative moving apparatuses for moving the panels along the work area (pushing members, translating devices, rotary tables, etc.), but with operation without the aid of the described robotic manipulator, such as, for example, by sorting the single elements (EN) on or roller conveyors.

Furthermore, the extreme cost-effectiveness of this solution in relation to the increase in productivity and reliability must also be noted here.

As a matter of fact, the idea underlying the invention, namely that of using an identification system that is movable along an axis perpendicular to the cutting line (LT) above the elements (EL) leaving the cutting station (2), allows the productivity of the cutting machine (1) to be increased, thus achieving considerable economic savings.

## Claims

1. A cutting machine (1) for cutting panels (P) made of wood, polymers, composite materials, fibre-cement or the like with consequent formation of elements (EL); the cutting machine (1) comprising at least one cutting station (2); at least one pushing member (SP) configured to move at least one panel (P) or at least one stack of panels (P) through the cutting station (2) according to a first direction (F2) substantially orthogonal with respect to said cutting station (2); a cutting assembly (GRT) mounted in said cutting station (2) and movable according to a second direction (F1) along a cutting line (LT) perpendicular to the first direction (F2) to cut at least one component chosen from said at least one panel (P) and at least one stack of overlapping panels (P); a work area (AL) configured to support said at least one component chosen from said at least one panel (P) and at least one stack of overlapping panels (P); said work area (AL) being defined by the set of a feeding plane (8) and a support plane (9); said support plane (9) being placed downstream of said cutting station (2) for the temporary housing of at least one element (EL); an identification device (14) for the panels (P) comprising, in turn, an applicator (17) for the application of an identification element (16) on said at least one element (EL) leaving the cutting station (2) and an electronic control unit configured for the management and control of the cutting machine (1); the cutting machine (1) being **characterized in that** said applicator means (17) is configured and designed to apply an identification code (16) on at least one element (EL), obtained by cutting at least one panel (P), leaving the cutting station (2); said applicator means (17) being movable, downstream of said cutting station (2), according to the first direction (F2) perpendicular to the cutting station (2) and according to a third vertical direction (F3) perpendicular to the support plane (9).

2. The cutting machine (1) as claimed in claim 1, **characterized in that** said applicator means (17) is movable according to the three Cartesian axes (F1), (F2), (F3).

3. The cutting machine (1) as claimed in claim 2, **characterized in that** said applicator means (17) is fixed on a robotic manipulator (18) consisting of a system of articulated arms connected to one another and capable of rotating around an axis (X) of a support means (19).

4. The cutting machine (1) as claimed in the preceding claim 3, **characterized in that** said robotic manipulator (18) is fixed to a support (19) movable according to a first direction (F2) by means of a relative guide (20) and a motor (21) of known type.

5. The cutting machine (1) as claimed in claim 1, **characterized in that** said applicator means (17) is fixed on a manipulator means (22) fixed to a support (19) movable according to a first direction (F2) by means of a relative guide (20) and a motor (21) of known type.

6. The cutting machine (1) as claimed in the preceding claim 5, **characterized in that** said applicator means (17) is fixed on an arm (23) of said manipulator means (22) movable in the first direction (F2) by means of a guide and a motor of known type.

7. The cutting machine (1) as claimed in any one of the preceding claims, **characterized in that** said applicator means (17) is capable of and designed for rotating around at least one relative axis (X; X') and is configured to place itself in an orthogonal position with respect to the geometric shape of the element (EL) to be identified.

8. The cutting machine (1) as claimed in any one of the preceding claims, **characterized in that** the identification device (14) for said at least one element (EL) comprises a label (16) printing and distribution means (15), which can be mounted in a fixed configuration accessible to the applicator means (17) or in a movable configuration designed to follow the movements of the applicator means (17).

9. The cutting machine (1) as claimed in any one of the preceding claims, **characterized in that** the cutting machine (1) comprises at least one robotic manipulator (10) configured and designed to pick up and move at least one element (EL) leaving the cutting station (2).

10. The cutting machine (1) as claimed in any one of the preceding claims, **characterized in that** the electronic control unit is configured, directly or by means of other electronic equipment, to determine the theoretical position and/or detect the exact position of said at least one element (EL) to be identified on the support plane (9) as it leaves the cutting station (2).

11. An operating method for operating a cutting machine comprising: at least one cutting station (2); at least one pushing member (SP) configured to move at least one panel (P) or at least one stack of panels (P) through the cutting station (2) according to a first direction (F2) substantially orthogonal with respect to said cutting station (2); a cutting assembly (GRT) mounted in said cutting station (2) and movable according to a second direction (F1) along a cutting line (LT) perpendicular to the first direction (F2) to cut at least one component chosen from said at least one panel (P) and at least one stack of overlapping panels (P); a work area (AL) configured to support said at least one component chosen from said at least one panel (P) and at least one stack of overlapping panels (P); said work area (AL) being defined by the set of a feeding plane (8) and a support plane (9); said support plane (9) being placed downstream of said cutting station (2) for the temporary housing of at least one element (EL); an identification device (14) for the panels (P) comprising, in turn, an applicator (17) for the application of an identification element (16) on said at least one element (EL) leaving the cutting station (2) and an electronic control unit configured for the management and control of the cutting machine (1); the operating method for operating the cutting machine being **characterized in that** it entails that the electronic control unit is configured, directly or by means of other electronic equipment, to determine the theoretical position and/or detect the exact position of said at least one element (EL) obtained by cutting said at least one panel (P) as it leaves the cutting station (2) on the support plane (9) and **in that** it entails that the applicator means (17) is configured and designed to apply the identification code (16) on said at least one element (EL) to be identified on the support plane (9) and, in particular, that it is configured and designed to be placed above the element (EL) to be identified on the support plane (9) according to a direction and ways determined by an arrow (F2) perpendicular to the cutting station (2).

12. The operating method as claimed in the preceding claim 11, **characterized in that** it further entails that the applicator means (17) is configured and designed to apply the identification code (16) on said at least one element (EL) leaving the cutting station (2) on the support plane (9) by placing itself above the support plane (9) in the area of said at least one element (EL) to be identified according to a further direction and ways determined by an arrow (F1) parallel to the cutting station (2).

13. The operating method as claimed in the preceding claim 11 or 12, **characterized in that** it further entails that the applicator means (17) is configured and designed to apply the identification code (16) on said at least one element (EL) leaving the cutting station (2) on the support plane (9) in an orthogonal position with respect to the geometrical shape of said at least one element (EL) by rotating around at least one relative axis (X; X') and placing itself on the support plane (9) above said at least one element (EL) to be identified in an orthogonal position with respect to the geometrical shape of the same said at least on element (EL) to be identified.
